# EUROPEAN PATENT SPECIFICATION

(11) **EP 1 229 054 B1**
(45) Date of publication and mention of the grant of the patent: **22.10.2003**
(21) Application number: 01102063.3
(22) Date of filing: 30.01.2001
(51) Int. Cl.: C08F 10/00, C08F 4/654

(54) **Catalyst component comprising magnesium, titanium, a halogen and an electron donor and its preparation**
Magnesium, Titanium, Halogen und Elektronendonor-enthaltende Kalalysatorkomponente und deren Herstellung
Composé catalytique comprenant du magnésium, du titane, un halogène et un donneur d'électrons et sa préparation

(43) Date of publication of application: 07.08.2002
(73) Proprietor: Borealis Technology Oy, 06101 Porvoo (FI)
(72) Inventor: Denifl, Peter, A-6156 Gries Am Brenner (AT); Leinonen, Timo, 06750 Tolkkinen (FI)
(74) Representative: Kador & Partner

(56) References cited:
- EP-A- 0 696 600
- WO-A-00/08073
- WO-A-00/08074
- US-A- 5 455 018
- US-A- 5 599 760

## Description

The invention relates to a process for the preparation of a particulate olefin polymerisation catalyst component comprising a magnesium dihalide, a titanium tetrahalide and a carboxylic acid ester. The invention also relates to such a catalyst component and its use for the polymerisation of olefins.

### Background of the invention

The process for the preparation of a particulate olefin polymer catalyst component described in WO 00/08073 and 00/08074 includes a step in which a magnesium dihalide-titanium tetrahalide-carboxylic acid ester complex is recovered by precipitation from solution. This precipitation is made by contacting the solution with a large amount of an aliphatic hydrocarbon. However, such precipitation leads to a tar-like reaction product of low catalytic activity, that needs to be washed several times in order to decrease the amount of inactive titanium complex. Such washing leads to a further decreased activity of the catalyst. Aromatic hydrocarbons have also been used for the precipitation, but they lead to a very finely divided precipitate which is difficult to deposit. Moreover it is difficult to carry out such precipitations in a controlled and reproducible manner.

EP-A-801,080 discloses addition of a solid divalent metallic halide, of unspecified particle size, during the manufacture of a polymerisation catalyst component from a liquid magnesium compound, a liquid titanium compound and an electron donor. Such addition is stated to lead to catalysts of high activity which yield products of high stereoregularity.

### Description of the invention

Although we have found that such problems can be to a significant extent avoided by the use as precipitant of a very small amount of an apolar solvent, we have now devised a new technique for effecting such precipitation which leads to a still further improved product morphology and even more consistent product composition.

According to the present invention a process for preparing a particulate olefin polymerisation catalyst component comprising a magnesium dihalide, a titanium tetrahalide and carboxylic acid ester, comprises reacting, in solution in a C₆-C₁₀ aromatic solvent, a magnesium compound containing an alkoxy group, a carboxylic acid halide, a C₂-C ₁₂ polyhydric alcohol and a reactive halogenated C₁-C₂₀ hydrocarbon to obtain a dissolved magnesium complex comprising an organomagnesium component and an internal electron donor component; and combining a liquid phase IV-valent titanium compound with said dissolved complex to form a solution of a catalyst precursor containing titanium and said complex; initiating formation in said solution of one or more oligoesters of said carboxylic acid with said alcohol, by addition to said solution of a quantity of apolar solvent insufficient to cause precipitation of said reaction product, the oligoester formation being continued until the resultant change in composition of the liquid phase causes co-precipitation of said one or more oligoesters and of said reaction product; and recovering, washing and drying the co-precipitate to obtain said catalyst component; and is characterised in that said combining is effected in the presence as seed of silica at a mol ratio Mg (complex)/SiO₂ (seed) of 1 to 500 or of MgCl₂ at a mol ratio Mg (complex)/MgCl₂ (seed) of 3 to 1100, the average particle size of the seed being 1 to 100µm.

The average particle size of the seed is preferably 5 to 50µm, still more preferably 5 to 30 µm. In advantageous embodiments of the invention the silica seed is added to the dissolved magnesium complex before the combining with said liquid phase IV-valent titanium compound or to that liquid phase itself: or the MgCl₂ seed is added to said liquid phase IV-valent titanium compound before the combining with said magnesium compound. It is however also possible to add the seed to said solution of a catalyst precursor. The silica seed may conveniently have a particle size of 20 to 30 µm, whilst the MgCl₂ seed may have a particle size of 5 to 15 µm, and its individual particles may be irregularly shaped. The process will usually result in a catalyst component which contains from 0.1 to 30% wt of matter derived from seed, preferably from 1 to 10% wt of such matter.

The quantity of apolar solvent added to the seed-containing solution of catalyst precursor is suitably from 1 to 10% mol of the already-present aromatic solvent. Advantageously the apolar solvent comprises a C₅-C₁₅ aliphatic hydrocarbon, which may be in admixture with a C₆-C₁₀ aromatic hydrocarbon, the aliphatic hydrocarbon constituting at least 10% vol, preferably 10 to 50% vol, of said admixture. The favoured aliphatic and aromatic hydrocarbons are heptane and toluene respectively. In the preferred procedure the solution of a catalyst precursor is formed at a temperature of 75-85°C, and after the addition of apolar solvent the temperature of the liquid phase is raised to 85-110°C and advantageously maintained at that temperature for at least 0.25 hr with agitation.

The invention further comprehends an olefin polymerisation catalyst comprising a catalyst component prepared as aforesaid; an alkyl aluminium co-catalyst; and an external electron donor. It also comprehends a process for the polymerisation of C₂ to C₁₀ α-olefins using such a catalyst.

Reverting to the process of preparing the particulate olefin polymerisation catalyst component, the reagents can be added to the aromatic solvent in any order. However a preferred embodiment of the invention is characterised in that in a first step the magnesium compound containing an alkoxy group is reacted with the carboxylic acid halide and in a second step the obtained product is further reacted with the four-valent titanium compound containing a halogen. The magnesium compound preferably contains from 1 to 20 cations per alkoxy group, and the carboxylic acid should contains at least 8 carbon atoms.

The quantity of apolar solvent added to initiate formation, and co-precipitation of the oligoesters with the reaction product will usually be within the range 2 to 5 mol% thereof. However the necessary amount cannot be expressed absolutely, since its effect is partly dependent upon the concentration, in the solution to which it is added, of the precursors of the oligoesters which are formed. If too much of the apolar solvent is added precipitation of the reaction product will occur prematurely, and the advantages of the inventive process will not be realised.

When the apolar solvent is added in the form of a mixture with an aromatic solvent such as employed in forming the reactant solution, particularly toluene, suitable proportioning of such a mixture is provided by a 10 to 50 vol%, preferably 20 to 40%, complement of the apolar solvent. Use of such a mixture, rather than straight apolar solvent, avoids the build-up of local concentrations of the apolar solvent high enough to cause premature precipitation.

Reaction of the magnesium compound, acid halide polyhydric alcohol and halogenated hydrocarbon proceeds satisfactorily at temperatures in the range 20 to 80°C, preferably 50 to 70°C. The product of that reaction, referred to sometimes herein as the "Mg complex", is advantageously reacted with the IV-valent titanium compound at a slightly higher temperature, say 75 to 85°C, which is the temperature of the reactant solution at the time the apolar solvent is added to it.

It can be beneficial, although it is not essential, for the temperature of the reactant solution to be raised further, suitably to a temperature in the range 85-110°C, particularly 85-95°C, immediately after addition of the apolar solvent, during formation of the oligoester. This may accelerate oligoester formation, and eventual precipitation. However this further temperature raising may be delayed until the onset of precipitation, at which time it is advantageously accompanied by agitation for a period of at least 0.25 hr, or until that precipitation has been completed.

The use of relatively low temperatures during formation of the oligoester conduces to better product morphology, in particular higher catalyst bulk density, whilst the use of relatively high temperature conduces to higher catalyst activity.

The use of an aromatic solvent for the reaction of the magnesium compound enables any solvent-removing evaporation step to be dispensed with, and the loss of reactive halogenated hydrocarbon (such as butyl chloride) which inevitably occurred during such evaporation is completely obviated. The consequent controllable higher concentration of this reactive component in the solution in which the Mg complex is formed, or in the Mg complex itself, improves morphology and product bulk density. Catalyst bulk density and morphology correlate with product bulk density and morphology - the so-called "replication effect". Moreover the apolar-solvent precipitation is more precise than that formerly employed, and both contributes to product consistency and reduces the volumes of solvent to be handled, thus improving process economics. It also applies a measure of control to the production of oligoester components. These components lower ultimate catalyst activity, but have a beneficial effect on catalyst morphology, and a balance must be struck between these oppositely-directed consequences of their presence.

In such a complex process, in which so many influences operate, often antagonistically, it is very difficult to exercise a control which will reliably lead to the development of a particular desired property in the ultimate product. This is particularly true in relation to the attainment of a particular desired catalyst particle size and particle size distribution: even the size and type of reactor, and type of stirrer, can have an unforeseeable effect on the values of these parameters.

We have observed that the most sensitive stage of the process, at which ultimate particle size and distribution are determined, is the initial formation of crystal nuclei at the beginning of crystallisation. Since it appears that no nuclei are formed during the preceding stages of the process, it is the number and size of these nuclei which dominates the development of the morphology of the product. Surprisingly, it has been found that the use of seeding according to the invention at this stage of the process not only causes the nucleation to proceed in a predictable manner, but does so in a manner which provides an ultimate catalyst component having a particle size and particle size distribution which fall within desirable limits without any undesirable change in other important catalyst parameters such as polymerisation activity and product specifications.

Magnesium chloride suitable for use as seed in the process may be obtained by ball-milling to the desired particle size (say 10 µm). A silica suitable for use in the process is directly commercially available, for instance Grace SP9-278 (tradename), 25µ PS. Product particle size is determined by seed particle size: larger seed particles give rise to larger catalyst particles. By contrast, the use of greater quantity of seed results in the formation of smaller catalyst particles (there is a linear correlation between product particle size and the cube root of the ratio catalyst yield seed quantity). Catalyst particle size distribution is generally similar to that of the seed, although with MgCl₂ seed a slightly better (i.e. narrower) catalyst particle size distribution can be obtained.

The invention thus makes it possible, by variation of seed particle size or quantity, to operate the catalyst production process in such a manner as to produce a catalyst having a desired specific particle size and particle size distribution.

Controlling and selecting seed particle sizes is easily effected. The number of factors affecting product properties is decreased, which makes the process easy and economical. Also changes in product quality can be made without troublesome changes in the whole process.

The amount of product fines is decreased when the process of the present invention is used. The fines are undesirable because they cause blockings and agglomeration, which are very harmful not only in the product but also in the processing. If fines are present they cause so call "hot spots" resulting in sticky and tacky material, which adheres onto the walls of reactors, pipes and pumps, and may actually cause blocking of such apparatus. Material containing fines is, moreover, difficult to handle.

The aromatic hydrocarbon used as solvent in the process is preferably selected from substituted and unsubstituted benzenes, preferably from alkylated benzenes, more preferably from toluene and the xylenes, and is most preferably toluene. The recovered fraction of the reaction product which has been obtained in particulate form is washed at least once, preferably at least twice, most preferably at least three times with a hydrocarbon, which preferably is selected from aromatic and aliphatic hydrocarbons. It is preferable if said recovered catalyst component is washed with toluene, preferably with hot (e.g. 90°C) toluene. It is further preferable if said recovered catalyst component is washed with heptane, most preferably with hot (e.g. 90°C) heptane. Yet further, it is preferable if said recovered catalyst component is washed with pentane. A washing step typically includes several substeps. Such a washing sequence is, for example, one wash with toluene at 90°C, two washes with heptane at 90°C and one or two washes with pentane at room temperature. The washing can be optimised to give a catalyst with novel and desirable properties. Finally, the washed catalyst component is dried.

The molar ratio of said aromatic solvent to said magnesium compound is preferably less than 10, usually from 4 to 10, preferably from 5 to 9 and most preferably from 6 to 8.

It is preferable if the intermediates as well as the final product of the process are distinct compounds with an essentially stoichiometric composition: Often, they are complexes. A complex is, according to Römpps Chemie-Lexicon, 7. Edition, Franckh'sche Verlagshandlung, W. Keller & Co., Stuttgart, 1973, page 1831, "a derived name of *compounds of higher order,* which originate from the combination of *molecules, -* unlike compounds of first order, in the creation of which atoms participate".

The magnesium compound containing an alkoxy group is preferably selected from the group consisting of magnesium dialkoxides, complexes of a magnesium dihalide and an alcohol, and complexes of a magnesium dihalide and a magnesium dialkoxide. It may be a reaction product of an alcohol and a magnesium compound selected from the group consisting of dialkyl magnesiums, alkyl magnesium alkoxides, alkyl magnesium halides and magnesium dihalides. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides and alkyl magnesium aryloxides.

The magnesium dialkoxide may be the reaction product of a magnesium dihalide such as magnesium dichloride or a dialkyl magnesium of the formula R₂Mg, wherein each one of the two Rs is a similar or different C₁-C₂₀ alkyl, preferably a similar or different C₄-C₁₀ alkyl. Typical magnesium alkyls are ethylbutyl magnesium, dibutyl magnesium, dipropyl magnesium, propylbutyl magnesium, dipentyl magnesium, butylpentylmagnesium, butyloctyl magnesium and dioctyl magnesium. Most preferably, one R of the formula R₂Mg is a butyl group and the other R is an octyl group, i.e. the dialkyl magnesium compound is butyl octyl magnesium. Typical alkyl-alkoxy magnesium compounds RMgOR, when used, are ethyl magnesium butoxide, butyl magnesium pentoxide, octyl magnesium butoxide and octyl magnesium octoxide. Dialkyl magnesium, alkyl magnesium alkoxide or magnesium dihalide can react with a polyhydric alcohol R'(OH)ₘ or a mixture thereof with a monohydric alcohol R'OH. The use of a polyhydric alcohol R'(OH)ₘ improves the morphology of the catalyst component compared to the use of a monohydric alcohol alone.

Typical C₂ to C₁₂ polyhydric alcohols may be straight-chain or branched and include ethylene glycol, propylene glycol, trimethylene glycol, 1,2-butylene glycol, 1,3-butylene glycol, 1,4-butylene glycol, 2,3-butylene glycol, 1,5-pentanediol, 1,6-hexanediol, 1,8-octanediol, pinacol, diethylene glycol, triethylene glycol, and triols such as glycerol, trimethylol propane and pentareythritol. The polyhydric alcohol can be selected on the basis of the activity and morphology it gives the catalyst component. E.g. larger particle size and broader particle size distribution can be obtained by using ethylene glycol.

The reaction solution may also contain a monohydric alcohol, which may be straight- or branched-chain. Typical C₁-C₂₀ monohydric alcohols are methanol, ethanol, n-propanol, iso-propanol, n-butanol, iso-butanol, sec.butanol, tert.butanol, n-amyl alcohol, iso-amyl alcohol, sec.amyl alcohol, tert.amyl alcohol, diethyl carbinol, akt. amyl alcohol, sec. isoamyl alcohol, tert.butyl carbinol. Typical C₆-C₁₀ monohydric alcohols are hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol and 2,7-dimethyl-2-octanol. Typical >C₁₀ monohydric alcohols are n-1-undecanol, n-1-dodecanol, n-1-tridecanol, n-1-tetradecanol, n-1-pentadecanol, 1-hexadecanol, n-1-heptadecanol and n-1-octadecanol. The monohydric alcohols may be unsaturated, as long as they do not act as catalyst poisons. Preferable monohydric alcohols are those of formula R'OH in which R' is a C₂-C₁₆ alkyl group, most preferably a C₄-C₁₂ alkyl group, like 2-ethyl-1-hexanol.

Preferably, essentially all of the carboxylic acid ester is a reaction product of the above mentioned carboxylic acid halide. The carboxylic acid halide is preferably a dicarboxylic acid dihalide, more preferably an unsaturated α,β-dicarboxylic acid dihalide, most preferably phthalic acid dichloride.

The four-valent titanium compound containing a halogen may be a titanium tetrahalide TiX"₄, wherein X" is a halogen. Equivalent with said titanium tetrahalide is the combination of an alkoxy titanium halide and a halogenation agent thereof, which are able to form a titanium tetrahalide *in situ*. However, the most preferred titanium tetrahalide is titanium tetrachloride.

The reaction conditions used in the claimed process may be varied according to the used reactants and agents.

The addition of at least one halogenated hydrocarbon during the process leads to a further improved catalytic activity. This halogenated hydrocarbon preferably has the formula R'"X'"ₙ wherein R'" is an n-valent C₁-C₂₀ hydrocarbyl group, particularly a C₁-C₁₀ paraffin, X'" is a halogen and n is an integer from 1 to 4. Such chlorinated hydrocarbons include monochloromethane, dichloromethane, trichloromethane (chloroform), tetrachloromethane, monochloroethane, (1,1)-dichloroethane, (1,2)-dichloroethane, (1,1,1)-trichloroethane, (1,1,2)-trichloroethane, (1,1,1,2)-tetrachloroethane, (1,1,2,2)-tetrachloroethane, pentachloroethane, hexachloroethane, (1)-chloropropane, (2)-chloropropane, (1,2)-dichloropropane, (1,3)-dichloropropane, (1,2,3)-trichloropropane, (1)-chlorobutane, (2)-chlorobutane, isobutyl chloride, tert.butyl chloride, (1,4)-dichlorobutane, (1)-chloropentane, (1,5)-dichloropentane. The chlorinated hydrocarbons of the invention may also be unsaturated, provided that the unsaturation does not act as catalyst poison in the final catalyst component.

In said halogenated hydrocarbon having the above formula, R'" is preferably a mono-or bivalent C₁-C₁₀ alkyl group, independently, X'" is preferably chlorine and, independently, n is preferably 1 or 2. Preferably said halogenated hydrocarbyl is a butyl chloride (BuCl) or a dichloroalkane like (1,4)-dichlorobutane, more preferably tertiary butyl chloride or a dichloroalkane like (1,4)-dichlorobutane, most preferably a dichloroalkane like (1,4)-dichlorobutane.

Some preferred embodiments of the invention are described, by way of illustration, in the following Examples.

### EXAMPLE 1

In a glass reactor 3,10 ml of ethylene glycol and 8,80 g of 2-butyl-2ethyl-1,3-propanediol were added to 69,5 ml of 2-ethyl hexanol. The reaction mixture was then heated to 50°C and stirred until a clear solution was obtained. After cooling to 10 - 15 °C, 216,0 ml of a 20% butyloctyl magnesium (BOMAG) solution in toluene was added slowly to the alcohol mixture within a period of about 60 minutes. During the addition of the Mg-alkyl the temperature of the reaction mixture was kept below 20°C. The temperature was then increased to 60°C and the reactants were allowed to react for 30 minutes.

After addition of 15,8 ml of 1,2-phthaloyl dichloride during a period of 15 minutes, the reaction mixture was stirred at 60°C for 90 minutes. Finally, 50,2 ml of n-butyl chloride was added and stirring of the solution at 60°C was continued for another 15 minutes to ensure complete reaction.

After cooling to room temperature a yellow solution was obtained, which could be stored under inert gas for several months without any indication of decomposition.

19,5 ml (0,175 mol) titanium tetrachloride were placed in a 250 ml synthesis glass reactor equipped with a mechanical stirrer. 0.30 g (3.1 mmol) of 9.0 µm average particle size magnesium dichloride seed was added to the reactor, the suspension was heated to 80°C, and about 35-36 g (the amount containing 25,0 mmol Mg) of the Mg-complex was added to the well-stirred suspension within 1 minute via a syringe. The mixture was then stirred for 5 minutes at 80°C. After addition of 6 ml of a toluene/n-heptane mixture (70/30=Volume/Volume) using a syringe, a dark red solution was obtained. The temperature of this reaction mixture was then increased from 80°C to 90°C over a period of 7 to 8 minutes, and stirring of the reaction mixture at that higher temperature was continued for additional 30 minutes.

After separating the liquid from the precipitated catalyst by siphoning, the obtained crude product was stirred at 90°C for 30 minutes with 100 ml of toluene (toluene is preheated to 90°C before addition), followed by removing of the washing toluene by siphoning. In the same way was the catalyst then washed two times with 60 ml n-heptane at 90°C (20 minutes stirring) and two times with n-pentane at room temperature (10 min stirring).

Finally the precipitate was dried at 60°C by purging nitrogen through the reactor, yielding about 3 g of the desired catalyst component in form of a yellow, air sensitive powder. Its bulk density was 0.61 g/ml.

Preparation of an olefin polymerisation catalyst including the obtained component was carried out as follows.

About 0.9 ml triethyl aluminium (TEA) (co-catalyst), ca 0.12 ml cyclohexyl methyl dimethoxy silane (CMMS) as an external donor and 30 ml n-pentane were mixed and allowed to react for 5 minutes. Half of the mixture was then added to a polymerisation reactor and the other half was mixed with about 20 mg of the above-prepared component. After an additional 5 minutes the catalyst/TEA/donor/n-pentane mixture was added to the reactor. The Al/Ti mole ratio was 250 mol/mol and the Al/CMMS mole ratio was 10 mol/mol.

Propylene standard bulk polymerisation was carried out in a stirred 5 l tank reactor.

70 mmol hydrogen and 1400 g propylene were introduced into the reactor and the temperature was raised within ca 15 minutes to the polymerisation temperature of 70°C. The polymerisation time at 70°C was 60 minutes, after which the polymer formed was taken out from the reactor.

### EXAMPLES 2-3

Two repetitions of Example 1 were performed, using 0.05 g (0.53 mmol) and 0.015 g (0.16 mmol) of MgCl₂ seed instead of the 0.3 g used in Example 1.

### EXAMPLE 4

Example 1 was repeated, except that 0.2 g of 25 µm average particle size silica seed was added to the Mg-complex before its addition to the well stirred TiCl₄. No MgCl₂ was added to the TiCl₄.

### EXAMPLE 5

Example 4 was repeated, except that only 0.1 g of the silica was used.

### COMPARATIVE EXAMPLE

By way of seed-free control test, Example 1 was repeated with no seed present during the mixing of the TiCl₄ and Mg complex.

**TABLE 1**

| Influence of the seed amount on catalyst particle size and size distribution | | | |
|---|---|---|---|
| Catalyst | Amount of seed¹[wt%] | Average particle size² [µm] | Span³ |
| Example 1 | 10 | 10,3 | 1,76 |
| Example 2 | 1,9 | 18,0 | 1,47 |
| Example 3 | 0,70 | 28,7 | 1,79 |
| Example 4 | 5,8 | 30,0 | 1,39 |
| Example 5 | 3,6 | 69,6 | 1,34 |
| Comp Ex 1 | 0 | 26,1 | 3,13 |

| | | | |
|---|---|---|---|
| ¹ amount of seed material used/amount of catalyst obtained ∗ 100% | | | |
| ² maximum of the particle size distribution curve, measured by Coulter analysis using Coulter LS 200 in n-heptane medium at room temperature with a sample content of 8-12%wt. | | | |
| ³ Span = (d₁₀-d₉₀/d₅₀ (e.g. d₁₀ = 34 µm means that 10% of catalyst particles have a size > 34 µm; d₁₀, d₉₀ and d₅₀ measured by Coulter analysis) | | | |

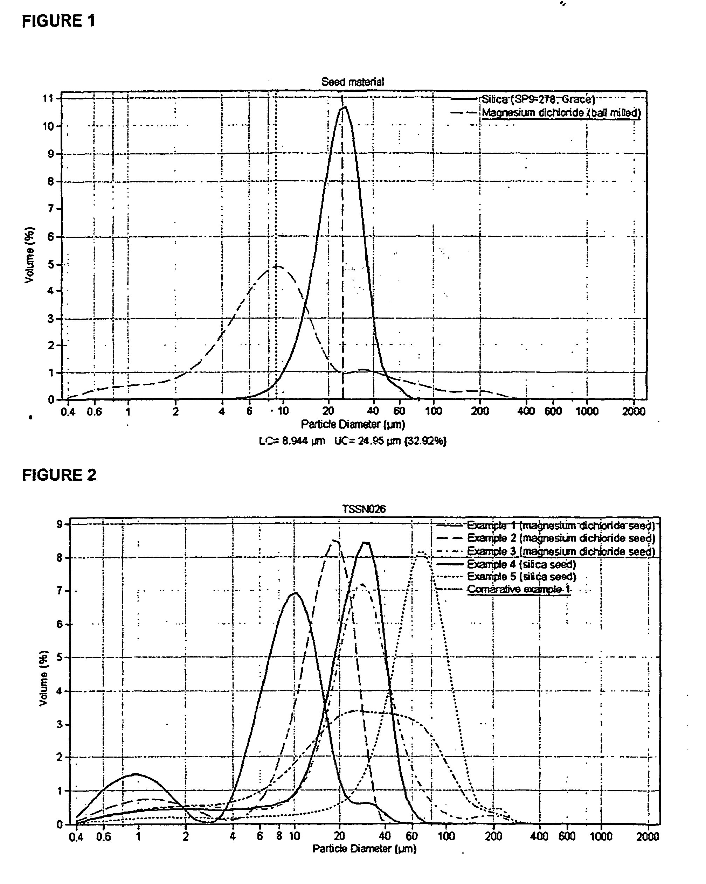

These data are presented in graphic form in Figures 1 and 2, which respectively illustrate in detail the seed and catalyst particle size distributions of the Examples. The sharpness of the peaks in Figure 2 for the seeded preparations compared with the unseeded preparation is particularly to be noted.

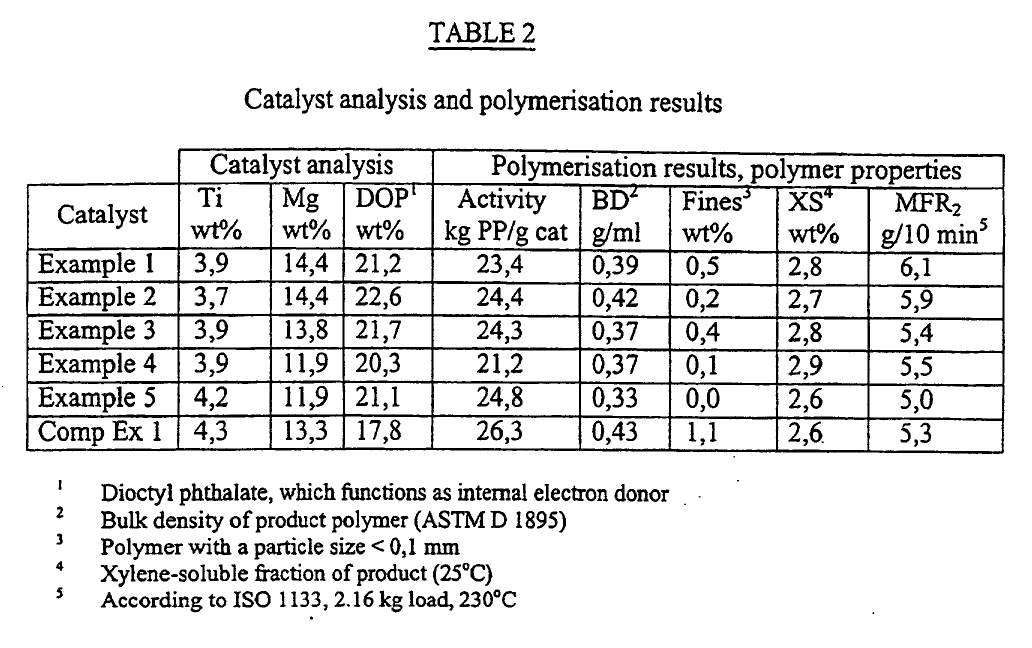

As can be seen from Table 1 the particle size distribution (shown by "Span" values) is much narrower when seed is used in catalyst preparation compared to the catalyst with no seed. The amount of fines (Table 2) in polymer is much smaller, when the catalyst of the invention is used compared to the case where no seed material is used. Further, it can be seen that the seed does not have any negative influence on the polymer properties (XS, MFR) which are maintained on the same level as with a non-seeded catalyst.

## Claims

1. A process for the preparation of a particulate olefin polymerisation catalyst component comprising a magnesium dihalide, a titanium tetrahalide and carboxylic acid ester, comprising
reacting, in solution in a C₆-C₁₀ aromatic solvent, a magnesium compound containing an alkoxy group, a carboxylic acid halide, a C₂-C₁₂ polyhydric alcohol and a reactive halogenated C₁-C₂₀ hydrocarbon to obtain a dissolved magnesium complex comprising an organomagnesium component and an internal electron donor component; and combining a liquid phase IV-valent titanium compound with said dissolved complex to form a solution of a catalyst precursor containing titanium and said complex;
initiating formation in said solution of one or more oligoesters of said carboxylic acid with said alcohol, by addition to said solution of a quantity of apolar solvent insufficient to cause precipitation of said reaction product, the oligoester formation being continued until the resultant change in composition of the liquid phase causes co-precipitation of said one or more oligoesters and of said reaction product; and
recovering, washing and drying the co-precipitate to obtain said catalyst component:
**characterised in that** said combining is effected in the presence as seed of silica at a mol ratio Mg (complex)/SiO₂ (seed) of 1 to 500 or of MgCl₂ at a mol ratio Mg (complex)/MgCl₂ (seed) of 3 to 1100, the average particle size of the seed being 1 to 100µm.

2. A process according to claim 1 wherein the average particle size of the seed is 5 to 50µm.

3. A process according to claim 1 wherein the average particle size of the seed is 5 to 30 µm.

4. A process according to any preceding claim wherein the silica is added to the dissolved magnesium complex before the combining with said liquid phase IV-valent titanium compound.

5. A process according to any preceding claim wherein the MgCl₂ is added to said liquid phase IV-valent titanium compound before the combining with said magnesium compound.

6. A process according to any preceding claim wherein said seed is added to said solution of a catalyst precursor.

7. A process according to any preceding claim wherein said catalyst component contains from 0.1 to 30% wt of matter derived from said seed.

8. A process according to any preceding claim wherein said catalyst component contains from 1 to 10% wt of matter derived from said seed.

9. A process according to any preceding claim wherein the quantity of apolar solvent added to the seed-containing solution of catalyst precursor is from 1 to 10% mol of the already-present aromatic solvent.

10. A process according to any preceding claim wherein said apolar solvent comprises a C₅-C₁₅ aliphatic hydrocarbon.

11. A process according to claim 10 wherein said aliphatic hydrocarbon is in admixture with a C₆-C₁₀ aromatic hydrocarbon.

12. A process according to claim 11 wherein said aliphatic hydrocarbon constitutes at least 10% vol of said admixture.

13. A process according to claim 12 wherein said aliphatic hydrocarbon constitutes at least 10 to 50% vol of said admixture.

14. A process according to any of claims 11 to 13 wherein the aliphatic and aromatic hydrocarbons are heptane and toluene respectively.

15. A process according to any preceding claim wherein said solution of a catalyst precursor is formed at a temperature of 75-85°C, and after the addition of apolar solvent the temperature of the liquid phase is raised to 85-110°C.

16. A process according to claim 15 wherein the liquid phase is maintained at 85-110°C for at least 0.25 hr with agitation.

17. An olefin polymerisation catalyst comprising a catalyst component prepared according to any of claims 1 to 16; an alkyl aluminium co-catalyst; and an external electron donor.

## Patentansprüche

1. Verfahren zur Herstellung einer partikelförmigen Katalysatorkomponente für die Olefinpolymerisation, die ein Magnesiumdihalogenid, ein Titantetrahalogenid und einen Carbonsäureester umfaßt, welches umfaßt:
Umsetzen einer Magnesiumverbindung, die eine Alkoxygruppe enthält, eines Carbonsäurehalogenids, eines mehrwertigen C₂-C₁₂-Alkohols und eines reaktiven, halogenierten C₁-C₂₀-Kohlenwasserstoffs in einer Lösung in einem aromatischen C₆-C₁₀-Lösungsmittel, wodurch ein gelöster Magnesiumkomplex erhalten wird, der eine Organomagnesiumkomponente und eine interne Elektronendonorkomponente umfaßt; und Kombinieren einer IV-wertigen Titanverbindung in der flüssigen Phase mit dem gelösten Komplex, wodurch eine Lösung einer Katalysatorvorstufe erzeugt wird, die Titan und den Komplex enthält;
Einleiten der Erzeugung von einem oder mehreren Oligoestern der Carbonsäure mit dem Alkohol in der Lösung, indem der Lösung eine Menge eines apolaren Lösungsmittels zugesetzt wird, die nicht ausreicht, um die Fällung des Reaktionsproduktes einzuleiten, wobei die Bildung des Oligoesters fortgesetzt wird, bis die resultierende Änderung der Zusammensetzung der flüssigen Phase zur gleichzeitigen Fällung von diesem einen oder mehreren Oligoestern und des Reaktionsproduktes führt; und
Gewinnen, Waschen und Trocknen des gleichzeitig gefällten Produktes, wodurch die Katalysatorkomponente erhalten wird:
**dadurch gekennzeichnet, daß** das Kombinieren in Gegenwart von Siliciumdioxid als Impfkristall bei einem Molverhältnis von Mg (Komplex)/SiO₂ (Impfkristall) von 1 bis 500 oder von MgCl₂ als Impfkristall bei einem Molverhältnis von Mg (Komplex)/MgCl₂ (Impfkristall) von 3 bis 1100 durchgeführt wird, wobei die mittlere Partikelgröße des Impfkristalls 1 bis 100 µm beträgt.

2. Verfahren nach Anspruch 1, wobei die mittlere Partikelgröße des Impfkristalls 5 bis 50 µm beträgt.

3. Verfahren nach Anspruch 1, wobei die mittlere Partikelgröße des Impfkristalls 5 bis 30 µm beträgt.

4. Verfahren nach einem der vorstehenden Ansprüche, wobei das Siliciumdioxid dem gelösten Magnesiumkomplex vor dem Kombinieren mit der IV-wertigen Titanverbindung in der flüssigen Phase zugesetzt wird.

5. Verfahren nach einem der vorstehenden Ansprüche, wobei das MgCl₂ der IV-wertigen Titanverbindung in der flüssigen Phase vor dem Kombinieren mit der Magnesiumverbindung zugesetzt wird.

6. Verfahren nach einem der vorstehenden Ansprüche, wobei der Impfkristall der Lösung einer Katalysatorvorstufe zugesetzt wird.

7. Verfahren nach einem der vorstehenden Ansprüche, wobei die Katalysatorkomponente 0,1 bis 30 Gew.-% eines Materials enthält, das von diesem Impfkristall abgeleitet ist.

8. Verfahren nach einem der vorstehenden Ansprüche, wobei die Katalysatorkomponente 1 bis 10 Gew.-% eines Materials enthält, das von diesem Impfkristall abgeleitet ist.

9. Verfahren nach einem der vorstehenden Ansprüche, wobei die Menge des apolaren Lösungsmittels, die der den Impfkristall enthaltenden Lösung der Katalysatorvorstufe zugesetzt wird, 1 bis 10 Mol-% des bereits vorhandenen aromatischen Lösungsmittels beträgt.

10. Verfahren nach einem der vorstehenden Ansprüche, wobei das apolare Lösungsmittel einen aliphatischen C₅-C₁₅-Kohlenwasserstoff umfaßt.

11. Verfahren nach Anspruch 10, wobei der aliphatische Kohlenwasserstoff ein Gemisch mit einem aromatischen C₆-C₁₀-Kohlenwasserstoff ist.

12. Verfahren nach Anspruch 11, wobei der aliphatische Kohlenwasserstoff mindestens 10 Vol.-% des Gemischs bildet.

13. Verfahren nach Anspruch 12, wobei der aliphatische Kohlenwasserstoff mindestens 10 bis 50 Vol.-% des Gemischs bildet.

14. Verfahren nach einem der Ansprüche 11 bis 13, wobei der aliphatische und der aromatische Kohlenwasserstoff Heptan bzw. Toluol sind.

15. Verfahren nach einem der vorstehenden Ansprüche, wobei die Lösung der Katalysatorvorstufe bei einer Temperatur von 75 bis 85°C erzeugt wird und die Temperatur der flüssigen Phase nach der Zugabe des apolaren Lösungsmittels auf 85 bis 110°C erhöht wird.

16. Verfahren nach Anspruch 15, wobei die flüssige Phase mindestens 0,25 h unter Rühren bei 85 bis 110°C gehalten wird.

17. Katalysator für die Olefinpolymerisation, der eine Katalysatorkomponente, die nach einem der Ansprüche 1 bis 16 hergestellt worden ist, einen Alkylaluminium-Cokatalysator und einen externen Elektronendonor umfaßt.

## Revendications

1. Procédé de préparation d'un composant de catalyseur particulaire de polymérisation d'oléfines comprenant un dihalogénure de magnésium, un tétrahalogénure de titane et un ester d'acide carboxylique, comprenant les étapes consistant à
faire réagir, en solution dans un solvant aromatique en C₆ à C₁₀, un composé de magnésium contenant un groupe alcoxy, un halogénure d'acide carboxylique, un alcool polyhydrique en C₂ à C₁₂ et un hydrocarbure halogéné réactif en C₁ à C₂₀ pour obtenir un complexe de magnésium dissous comprenant un composant organomagnésium et un composant donneur d'électrons interne ; et combiner un composé de titane tétravalent en phase liquide avec ledit complexe dissous pour former une solution d'un précurseur de catalyseur contenant du titane et ledit complexe ;
initier la formation dans ladite solution d'un ou de plusieurs oligoesters dudit acide carboxylique avec ledit alcool, par addition à ladite solution d'un quantité de solvant non polaire insuffisante pour provoquer la précipitation dudit produit de réaction, la formation de l'oligoester étant continuée jusqu'à ce que le changement résultant dans la composition de la phase liquide provoque une co-précipitation desdits un ou plusieurs oligoesters et dudit produit de réaction ; et
récupérer, laver et sécher le co-précipiter pour obtenir ledit composant de catalyseur ;
**caractérisé en ce que** ladite étape de combinaison est effectuée en présence de silice à titre de germe avec un rapport molaire Mg(complexe)/SiO₂(germe) de 1 à 500 ou de MgCl₂ à un rapport molaire Mg(complexe)/MgCl₂(germe) de 3 à 1100, la taille moyenne de particule du germe étant de 1 à 100 µm.

2. Procédé selon la revendication 1, dans lequel la taille moyenne de particule de la semence est de 5 à 50 µm.

3. Procédé selon la revendication 1, dans lequel la taille moyenne de particule du germe est de 5 à 30 µm.

4. Procédé selon l'une quelconque des revendications précédentes, dans lequel la silice est ajoutée au complexe de magnésium dissous avant la combinaison avec ledit composé de titane tétravalent en phase liquide.

5. Procédé selon l'une quelconque des revendications précédentes, dans lequel le MgCl₂ est ajoutée au composé de titane tétravalent en phase liquide avant de le combiner avec ledit composé de magnésium.

6. Procédé selon l'une quelconque des revendications précédentes, dans lequel ladite semence est ajoutée à ladite solution d'un précurseur de catalyseur.

7. Procédé selon l'une quelconque des revendications précédentes, dans lequel ledit composant de catalyseur contient de 0,1 à 30% en poids de matière dérivée dudit germe.

8. Procédé selon l'une quelconque des revendications précédentes, dans lequel ledit composant de catalyseur contient de 1 à 10% en poids de matière dérivée dudit germe.

9. Procédé selon l'une quelconque des revendications précédentes, dans lequel la quantité de solvant non polaire ajoutée à la solution de précurseur de catalyseur contenant le germe est de 1 à 10% molaire du solvant aromatique déjà présent.

10. Procédé selon l'une quelconque des revendications précédentes, dans lequel ledit solvant non polaire comprend un hydrocarbure aliphatique en C₅ à C₁₅.

11. Procédé selon la revendication 10, dans lequel ledit hydrocarbure aliphatique est en mélange avec un hydrocarbure aliphatique en C₆ à C₁₀.

12. Procédé selon la revendication 11, dans lequel ledit hydrocarbure aliphatique constitue au moins 10% en volume dudit mélange.

13. Procédé selon la revendication 12, dans lequel ledit hydrocarbure aliphatique constitue au moins 10 à 50% en volume dudit mélange.

14. Procédé selon l'une quelconque des revendications 11 à 13, dans lequel lesdits hydrocarbures aliphatiques et aromatiques sont de l'heptane et du toluène respectivement.

15. Procédé selon l'une quelconque des revendications précédentes dans lequel ladite solution d'un précurseur de catalyseur est formée à une température de 75 à 85°C, et après l'addition d'un solvant non polaire la température de la phase liquide est élevée à 85 à 110°C.

16. Procédé selon la revendication 15, dans lequel la phase liquide est maintenue à 85 à 110°C pendant au moins 0,25 heure sous agitation.

17. Catalyseur de polymérisation des oléfines comprenant un composant de catalyseur préparé selon l'une quelconque des revendications 1 à 16 ; un cocatalyseur d'alkyle aluminium ; et un donneur d'électrons externe.
